# EUROPEAN PATENT APPLICATION

(11) **EP 3 428 060 A1**
(43) Date of publication of application: **16.01.2019**
(21) Application number: 17305937.9
(22) Date of filing: 13.07.2017
(51) Int. Cl.: B64C 11/20, F01D 5/14, F01D 5/28, C25D 1/00, F04D 29/02

(54) **SHEATH**

(71) Applicant: Ratier-Figeac SAS, 46101 Figeac Cedex (FR)
(72) Inventor: THOMAS, François-Henri, 46101 Figeac (FR); DERBOIS, Patrick, 46101 Figeac (FR)
(74) Representative: Dehns

(57) **Abstract**

A sheath (12) for a leading edge structure (10) comprises a sheath core (14) and a protective electroformed coating (16) provided on an external surface (18) of the sheath core (14).

## Description

### TECHNICAL FIELD

The present disclosure relates to a shield which may be used, for example, in a leading edge of an aircraft or aircraft engine structure, for example a blade of a propeller, a gas turbine engine or a helicopter, and a method of constructing the sheath.

### BACKGROUND

It is known in various structures, for example fan blades of a gas turbine and propeller blades , to provide a shield or sheath on the leading edge of the structure in order to provide protection against erosion and impact damage. Typically the sheath is formed of titanium.

### SUMMARY

The present disclosure provides a sheath for a leading edge structure comprising a sheath core and a protective electroformed coating provided on an external surface of the sheath core.

In embodiments, the the protective coating may extend beyond edges of the sheath core.

In embodiments, the protective coating may be a Cu-Ni-Co or Ni-Co alloy.

In various embodiments, the sheath core may a plastics material, for example an elastomeric material or PEEK.

In other embodiments, the sheath core may be metallic, for example aluminium.

In various embodiments, the sheath core may be a metallic foam or metallic honeycomb.

In various embodiments, the sheath core may have a thickness of 1 to 50 mm, for example 10 mm to 25 mm.

In various embodiments, the protective coating may have a thickness of 0.1 to 10 mm, for example 0.25 mm to 1.5 mm, for example 0.5 mm to 1 mm.

The disclosure also provides a blade, for example a fan blade for a gas turbine engine or a propeller blade, the blade comprising a sheath embodying the disclosure attached to a leading edge of the blade.

The disclosure also provides a method of forming a sheath for a leading edge structure. The method comprises providing a mandrel, positioning a sheath core on the mandrel and electroforming a protective coating over an external surface of the sheath core.

In embodiments, an electrically conductive interface may be provided between the sheath core and the mandrel.

In various embodiments the electrically conductive interface comprises an electrically conductive coating or paint.

In various embodiments, the sheath core may be bonded to the mandrel by means of an electrically conductive adhesive, for example by an electrically conductive epoxy.

In various embodiments, the method further comprises sealing around a periphery of the sheath core on the mandrel to prevent ingress of electroforming medium into the interface between the mandrel and the sheath core.

The sealing may be provided by an electrically conductive sealant, for example mastic.

The disclosure also provides a method of making a blade, for example a fan blade for a gas turbine engine, or a propeller blade, comprising attaching a sheath in accordance with the disclosure to a leading edge of the blade.

### BRIEF DESCRIPTION OF DRAWINGS

An embodiment of this disclosure will now be described, by way of example only, with reference to the accompanying drawings in which:
Figure 1 illustrates, schematically, a fan blade for a gas turbine engine having a leading edge sheath;
Figure 2 illustrates, schematically, a cross sectional view through the sheath of Figure 1, taken along line 2-2
Figure 3 illustrates, schematically, a first stage in the manufacture of a leading edge sheath;
Figure 4 illustrates, schematically, a second stage in the manufacture of the leading edge sheath;
Figure 5 illustrates a detail of Figure 4;
Figure 6 illustrates, schematically, a further stage in the manufacture of the leading edge sheath;
Figure 7 illustrates, schematically, the finished leading edge sheath; and

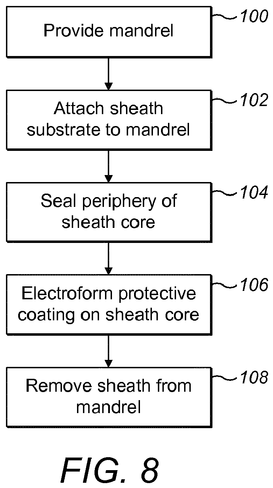

Figure 8 illustrates, schematically, the steps in the manufacturing process.

### DETAILED DESCRIPTION

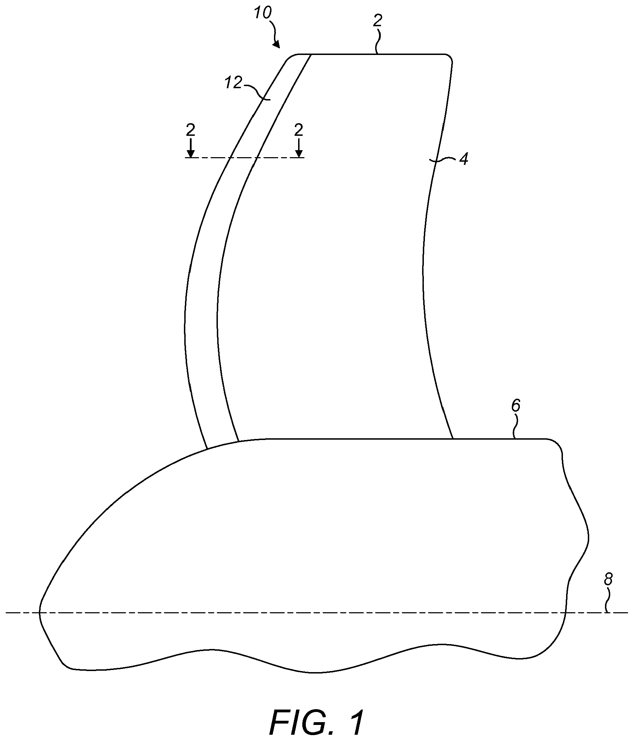

With reference to Figure 1, a fan blade 2 for a gas turbine engine is illustrated schematically. The fan blade 2 has an airfoil 4 which extends outwardly from a hub 6 for rotation about an axis 8. To protect the leading edge 10 of the fan blade 2 from erosion from airborne contaminants such as sand and other particulates and from impact damage, for example due to bird strikes, the leading edge 10 of the fan blade 2 is provided with a protective shjeld or sheath 12. As illustrated in this embodiment, the sheath 12 extends along the entire leading edge 10 of the fan blade 2. In other embodiments, the sheath 12 may extend over only a portion of the leading edge 10.

The sheath 12 is formed separately from the fan blade 2 and is attached to it by suitable means, for example by adhesive. Such techniques are known in the art and need not, therefore, be described in detail here.

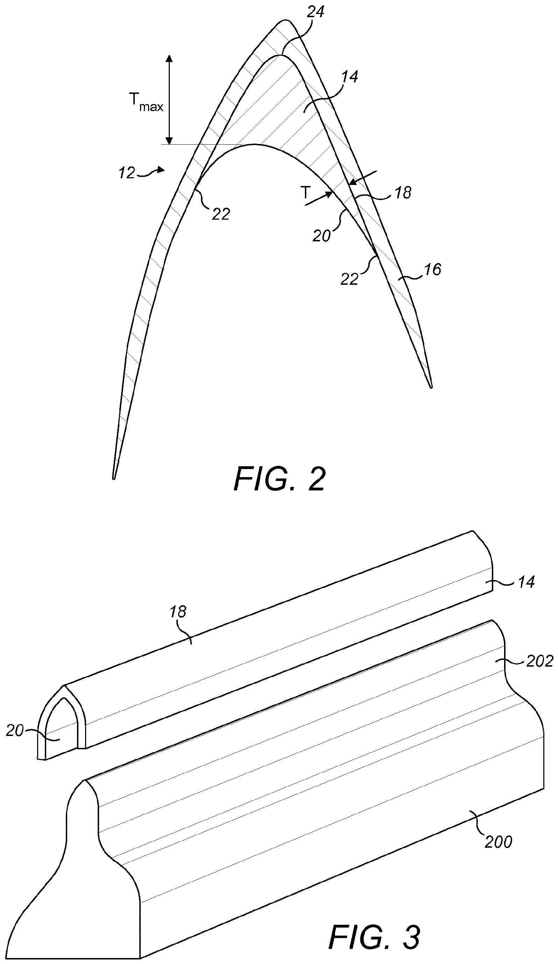

A sheath 12 according to an embodiment of the disclosure, for use, for example, as a fan blade leading edge sheath, is illustrated in Figure 2.

The sheath 12 is a composite construction comprising a sheath core 14 which is provided with an erosion resistant protective coating 16 on an external surface 18 thereof. As can be seen from Figure 2, the protective coating 16 also extends beyond the ends 22 of sheath core 14 in a chordwise direction of the airfoil 4. As will be described further below, the protective coating 16 is formed on the sheath core 14 by means of an electroforming process. The internal surface 20 of the sheath 12 is complementary to the external profile of the blade leading edge 10.

The sheath core 14 can be made from a wide variety of materials. The particular material used may be chosen to provide appropriate mechanical properties to the sheath 12. The substrate 14 can also provide appropriate thermal conduction properties which may be useful in certain applications, such as propeller blades which may comprise de-icing elements under the sheath 12.

In certain embodiments, the sheath core 14 may be made from a plastically or elastically deformable material such that it will absorb energy from any object striking the leading edge 10 of the fan blade 2. The material may therefore be an elastomeric material in certain embodiments. In other embodiments, the material may be a reticulate or foam material. In particular embodiments the material may be a metallic foam material. A metallic foam material has a cellular structure consisting of a solid metal with gas-filled pores comprising a large portion of the volume. The pores can be sealed (closed-cell foam) or interconnected (open-cell foam). Typically the metallic foam has a high porosity, for example only 5-25% of the volume being base metal.. In other embodiments, the sheath core may be a honeycomb construction, for example a metal honeycomb construction. Metallic materials may be advantageous in that they provide strength to the leading edge region while at the same time being relatively light. A metal such as aluminium may be used as an example

In other embodiments, the sheath core 14 may be made from a composite material.

In yet further embodiments, the sheath core 14 may simply be made from a solid metallic material, such as aluminium. While this may not provide energy absorption, it may provide strength while at the same time being lighter than the traditional, titanium material used.

In yet further embodiments, the sheath core 14 may be made from a polymeric material. A suitable material may be polyether ether ketone (PEEK). This material is robust and will provide mechanical strength to the sheath 12.

The thickness of the sheath core 14 may also be chosen to provide appropriate properties to the sheath 12. In some embodiments, the sheath core thickness may be from 1 to 50 mm, for example 10 to 25 mm.

The wall thickness T of the sheath core 14 may vary. Thus for example, it may have a maximum wall thickness Tₘₐₓ at the sheath core leading edge 24 and a reduced wall thickness T away from the leading edge 24. In embodiments, the wall thickness T may reduce in a continuous manner from the leading edge 24.

The sheath core 14 may be symmetrical about its central axis, although in other embodiments it may be asymmetrical, whereby the variation in wall thickness T may be different on either side of the core leading edge 24.

Turning now to the protective coating 16, this is an electro-formed coating formed on the external surface 18 of the sheath core 14. The material of the coating 16 is chosen to provide appropriate erosion and/or impact protection for the component to which the sheath 12 is attached.

In certain embodiments, the material of the coating may be a Ni-Co or Cu-Ni-Co alloy. However, other coating materials may be used provided they are formable by an electroforming process and provide the requisite erosion resistance.

In certain embodiments, the thickness of the protective coating 16 may be between 0.1 and 10 mm, for example between 0.5 and 1 mm. Again, the particular thickness of the protective coating 16 may be chosen to provide the appropriate level of protection for the particular application. The thickness of the protective coating 16 may vary.

In the embodiment disclosed, the protective coating 16 is provided over the entire external surface 18 of the sheath core 14. However, this is not essential, and the protective coating 16 could be provided on just selected regions of the sheath core 14. Also, the protective coating 16 need not extend beyond the ends of the sheath core 14 as illustrated in Figure 2.

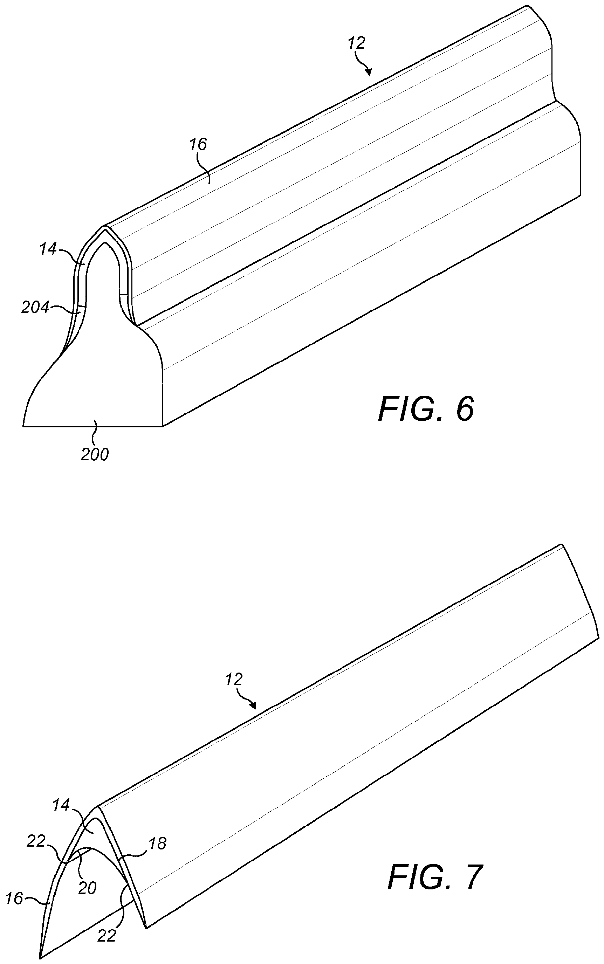

An exemplary embodiment of a process for producing the sheath 12 described above will now be described with reference to Figures 3 to 7.

In a first step 100, a mandrel 200 it is provided. The mandrel 200 has a portion 202 for receiving a sheath core 14. The portion 202 has a shape and profile which corresponds to that of the leading edge to which the sheath 12 will eventually be fitted.

The mandrel 200 may be made of any suitable material for use in an electroforming process. For example, in one embodiment, the mandrel 200 may be made from stainless steel.

In a second step 102, the sheath core 14 is mounted on the receiving portion 202 of the mandrel 200. In order to provide for adequate electrical conduction at the interface between the mandrel 200 and the sheath core 14, the sheath core 14 may be pre-treated. For example, in certain embodiments, the internal surface 20 of the sheath core 14 may be coated, for example sprayed, with a highly electrically conductive material for example an electrically conductive paint or other coating material. This is particularly important where the material of the sheath core 14 is non-metallic and therefore non-electrically conductive.

The external surface 18 of the sheath core 14 may also be coated, for example sprayed, with a highly electrically conductive material for example an electrically conductive paint or other coating material. This will ensure that the protective coating 16 will be properly deposited on the external surface 18 of the sheath core 14 during electroforming.

The sheath core 14 may be mounted to the mandrel 200 by means of an electrically conductive adhesive. In one embodiment, the electrically conductive adhesive may be an electrically conductive epoxy. Such an adhesive can be made simply by mixing an appropriate amount of electrically conductive particles into an epoxy resin.

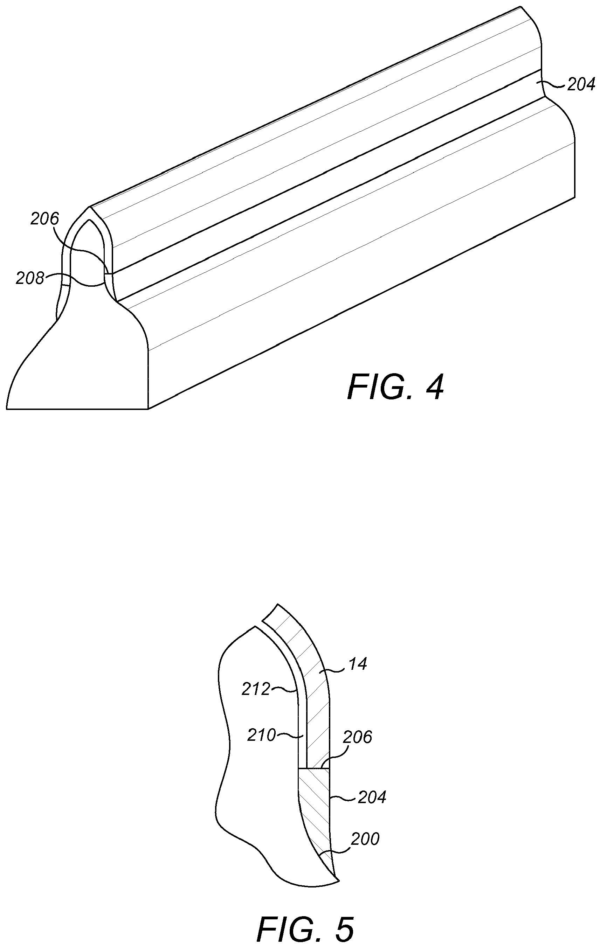

In a third step 104, an electrically conductive sealing material 204 is applied along the periphery 206 of the sheath core 14 at its junction 208 with the mandrel 200. This is illustrated in figures 4 and 5. The sealing material 204 is intended to prevent the ingress of electroforming fluid into the interface 210 between the internal surface 20 of the sheath core 14 and the external surface 212 of the mandrel 200 and thereby prevent deep position of material within the interface 210. The electrically conductive sealing material 204 may, for example, be a mastic material which may be easily removed after electrodeposition of the protective coating 16 on the sheath core.

In a fourth step 106, the protective coating 16 is electroformed on the sheath core 14. Electroforming is a well known technique in which a metal is deposited on a substrate in an electrolytic bath from a metal source within the bath. An electrical potential is applied between the electrical substrate and the metal source, the metal then being deposited from the electrolytic bath onto the substrate. As this technique is a well known one, there is no need to discuss it in detail here.

The mandrel 200 may be attached to a suitable support and lowered into an electrolytic bath such that the sheath core 14 is immersed in the bath. An electrical potential is then applied between the mandrel 200 and a source of metal to be deposited and deposition then effected. The metal, as discussed above, may be a Cu-Ni-Co or Ni-Co alloy for example. The deposition process continues for as long as is necessary to produce a protective coating 16 of the desired thickness. As discussed above, this may be between 0.5 and 1.2 mm.

It will be appreciated that the protective coating 16 will not only be formed over the sheath substrate 14, but also over the adjacent external surface 212 of the mandrel 200. This means that the protective coating will extend beyond the ends 22 of the sheath core 14.

After deposition has finished, the mandrel 200 is removed from the electrolytic bath and in a fifth step 108, the sheath 12 removed from the mandrel 200. The use of an epoxy adhesive to attach the sheath core 14 to the mandrel 200 may facilitate removal due to the relatively low shear strength of the adhesive. In addition, the sealing material 204 may easily be removed from the junction between the sheath core 14 and the mandrel 200.

The sheath 12 may then be finished by any appropriate technique, for example grinding and then attached to an appropriate surface, for example a fan blade or propeller blade leading edge 10.

The leading edge sheath 12 of embodiments of the invention may be advantageous in several respects. Firstly, it may provide adequate protection to a leading edge surface with a potentially lighter construction than existing sheaths. In addition, the mechanical properties of the sheath 12 may advantageously be varied by the appropriate choice of a core material. As discussed above, the core material may provide an impact damping effect.

Whilst the disclosure has been described in terms of a leading edge sheath for a fan blade of a gas turbine engine or a propeller blade, it will be appreciated that the disclosure has wider application. In particular, it may be used in protecting any leading edge surface which may be subject to wear, erosion or impact. Other surfaces of a gas turbine engine, for example the leading edge of a fan nacelle or the leading edge of a vane, for example a fan exit guide vane. Other leading edge structures of an aircraft may also benefit from the disclosure.

## Claims

1. A sheath (12) for a leading edge structure (10), comprising a sheath core (14) and a protective electroformed coating (16) provided on an external surface (18) of the sheath core (14).

2. A sheath as claimed in claim 1, wherein the protective coating (16) extends beyond edges (22) of the sheath core (14).

3. A sheath as claimed in claim 1 or 2, wherein the protective coating (16) is a Cu-Ni-Co or Ni-Co alloy.

4. A sheath as claimed in any preceding claim, wherein the sheath core (14) is a plastics material, for example an elastomeric material or PEEK.

5. A sheath as claimed in any of claims 1 to 3, wherein the sheath core (14) is metallic, for example aluminium.

6. A sheath as claimed in claim 5, wherein the sheath core (14) is a metallic foam or metallic honeycomb.

7. A sheath as claimed in any preceding claim, wherein the sheath core (14) has a thickness of 1 to 50 mm, for example 10 mm to 25 mm, and /or wherein the protective coating (16) has a thickness of 0.1 to 10 mm, for example 0.25 mm to 1.5 mm, for example 0.5 mm to 1 mm.

8. A blade (2) for example a fan blade for a gas turbine engine or a propeller blade, the blade (2) comprising a sheath (12) as claimed in any preceding claim attached to a leading edge (10) of the blade (2).

9. A method of forming a sheath (12) for a leading edge structure comprising:
a) providing a mandrel (200);
b) positioning a sheath core (14) on the mandrel (200); and
c) electroforming a protective coating (16) over an external surface (18) of the sheath core (14).

10. A method as claimed in claim 9, wherein an electrically conductive interface is provided between the sheath core (14) and the mandrel (200).

11. A method as claimed in claim 10, wherein the electrically conductive interface comprises an electrically conductive coating or paint.

12. A method as claimed in claim 9, 10 or 11, wherein the sheath core (14) is bonded to the mandrel (200) by means of an electrically conductive adhesive, for example by an electrically conductive epoxy.

13. A method as claimed in any of claims 9 to 12, further comprising sealing around a periphery (206) of the sheath core (14) on the mandrel (200) to prevent ingress of electroforming medium into the interface (210) between the mandrel (200) and the sheath core (14).

14. A method as claimed in claim 13, wherein the sealing is provided by an electrically conductive sealant (204), for example mastic.

15. A method of making a blade, for example a fan blade for a gas turbine engine, or a propeller blade, comprising attaching a sheath (12) as claimed in any of claims 1 to 7 to a leading edge (10) of the blade (2).
